# FASCICULE DE BREVET EUROPEEN

(11) **EP 0 864 789 B1**
(45) Date de publication et mention de la délivrance du brevet: **23.01.2002**
(21) Numéro de dépôt: 98390004.4
(22) Date de dépôt: 16.02.1998
(51) Int. Cl.: F16K 7/14

(54) **Vanne à membrane**
Membranventil
Diaphragm valve

(30) Priorité: 17.02.1997 FR 9701933
(43) Date de publication de la demande: 16.09.1998
(73) Titulaire: Qualiflow S.A., 34935 Montpellier Cedex 9 (FR)
(72) Inventeur: Navratil, Pierre, 34090 Montpellier (FR); Gotas, Alain, 34110 Frontignan (FR)
(74) Mandataire: Ravina, Bernard

(56) Documents cités:
- EP-A- 0 530 947
- DE-A- 1 400 589
- US-A- 4 953 826

## Description

La présente invention a pour objet une vanne à membrane destinée au contrôle de circuits de fluides de haute pureté, comportant un corps de vanne, une membrane élastique, un siège de membrane inséré dans un logement formé à cet effet dans le corps de la vanne et un couvercle de serrage de la membrane. Les différents éléments de la vanne assurant l'obturation présentent des caractéristiques de matériau, d'élasticité et de géométrie optimisées pour garantir à la fois l'étanchéité vis à vis du milieu extérieur, un fonctionnement correct de la vanne et une résistance aux produits corrosifs.

Dans la situation actuelle, la technologie des vannes de contrôle de fluide comprend d'une part les vannes dites à soufflet, et d'autre part les vannes à membrane. Les vannes à soufflet offrent des avantages d'excellent coefficient de débit et de possibilité de travailler en dépression jusqu'à un vide de 10-3 ou 10-4 Torr. Par contre, elles ont pour inconvénients principaux les problèmes de fabrication du soufflet du fait des contours mécaniques variables, ainsi qu'un volume mort important dans la vanne augmentant considérablement le temps de purge des vannes. Enfin, ces vannes à soufflet présentent des problèmes de pollution du gaz par des particules issues du soufflet.

Les vannes à membrane comprennent un corps dans lequel sont ménagés des conduits d'amenée et d'évacuation du fluide, le conduit d'amenée débouchant dans une face en regard de laquelle est montée une membrane qui, par déformation, est susceptible d'isoler ou de mettre en communication les conduits d'amenée et d'évacuation de fluide, en obturant ou non l'extrémité du conduit d'amenée du fluide qui forme un siège pour la membrane.

Les vannes à membrane ont pour avantage majeur la simplicité de confection par rapport aux vannes à soufflet, avec une réalisation possible par emboutissage, pliage ou découpage. Par ailleurs elles offrent un volume mort très réduit et un état de surface meilleur menant à une pollution nettement plus réduite du gaz

En contrepartie de ces avantages, elles présentent des problèmes de débit limité en position ouverte par le débattement de la membrane, de risque d'introduction d'humidité dans les lignes de fluides, et de réaction aux gaz tels que HCl entrainant une corrosion et une attaque chimique des lignes de fluides. Enfin, des questions d'étanchéité du contact membrane / embase en position fermée se posent pour ce type de vanne.

Différentes améliorations ont été apportées aux vannes à membrane, en particulier dans le choix d'embases rondes plus précises (FR-A-2677424) ou par la définition de géométries de membranes permettant d'augmenter le débit en position ouverte de la vanne (FR-A-2677425).

Le brevet EP 0 530 947 décrit une vanne à membrane dans laquelle la membrane a la forme d'une coupelle ou de calotte sphérique.

La membrane est montée dans une chambre entre un palier de celle-ci et une bague qui bloque en déformation le bord périphérique de la calotte constituant la membrane.

La forme en calotte sphérique de la membrane impose des efforts de déformation importante à celle-ci pour passer d'une position contre le siège à une position écartée du siège, ce qui peut entraîner une détérioration rapide de la membrane.

Le brevet US 4 953 826 décrit une vanne à membrane du type énoncé plus haut dans lequel la membrane déformable est un disque plan qui est déformé par une tête actionneur courbe ou en portion de sphère.

Le bord périphérique de la membrane est bloqué entre un palier de la chambre et un fourreau. Cette conformation de la membrane et de la tête actionneur peut conduire à une déformation de la membrane par poinçonnement et à sa détérioration.

Le but de l'invention est de proposer une vanne à membrane qui évite ces inconvénients.

Un autre but de l'invention est de remédier au problème de fermeture automatique des vannes à membrane lors de la mise sous vide de la ligne de fluide. En effet, dans le cas le plus fréquent de vanne à membrane plane, comme dans le brevet US 4 953 826, lors de la mise sous vide de la ligne de fluide, la membrane a tendance à se déformer naturellement sous l'effet de l'aspiration et à se fermer par appui sur le siège.

L'invention vise en outre à améliorer l'étanchéité de la vanne par rapport au milieu extérieur.

A cet effet, la présente invention concerne une vanne destinée au contrôle de circuits de flux de fluide gazeux ou humide, ladite vanne comportant un corps de vanne comprenant une embase de vanne dans laquelle sont ménagés les conduits d'arrivée et d'évacuation de fluide, une membrane en forme de couple commandée par un piston venant par déformation s'appliquer sur le rebord du conduit d'arrivée pourvu d'un siège, la membrane étant serrée sur son bord entre le corps de vanne et un couvercle de serrage, la coupelle de la membrane comprenant un rebord périphérique délimité par un pliage circulaire définissant une portion annulaire inclinée délimitée par un pliage circulaire entourant le fond de la coupelle et se caractérise en ce que le rebord périphérique forme un angle avec le fond de la coupelle, le pliage circulaire étant orienté vers le haut de manière à légèrement relever le rebord périphérique.

Suivant une autre caractéristique de l'invention, le siège sur lequel appuie la coupelle présente une surface annulaire plane et deux parois inclinées convergentes de part et d'autre de la surface.

Cette disposition permet à la membrane de conserver une position de repos Normalement Ouverte (NO) ou Normalement Fermée (NC) par le seul jeu de la force de rappel créée par son élasticité. Contrairement aux membranes des vannes à membrane connues, qui ont une forme essentiellement plane, et qui ont tendance à se fermer naturellement sous l'effet de l'aspiration lors de la mise sous vide de la canalisation de gaz.

Selon une disposition particulière, le rayon de courbure de la coupelle en calotte est approximativement égal à 20 fois le rayon de la coupelle.

Cette disposition résulte de l'expérience et offre de bons résultats autant en élasticité de la membrane qu'en effort demandé pour passer de position ouverte en position fermée.

Selon une disposition plus particulière, la membrane pour vanne 1/4 de pouce est caractérisée en ce que l'épaisseur de la membrane est comprise entre 0,08 et 0,16 mm, en ce que son diamètre est de 20 mm environ, en ce que le rayon de courbure de la calotte est de 200 mm environ, en ce que l'angle formé par le rebord avec le fond de la coupelle est compris entre 25 et 40°, et en ce que la profondeur de la coupelle est d'environ 0,85 mm entre le fond de la calotte sphérique et le rebord de la coupelle.

De même, ces données précises de géométrie de la membrane permettent d'obtenir de très bons résultats de fonctionnement opérationnel de la vanne à membrane.

De façon encore plus spécifique, la membrane est réalisée en alliage métallique ayant des propriétés de résistance chimique équivalentes à celle d'un acier inox austénitique référencé 316 L selon la norme ASTM, chargé en cobalt pour lui conférer des propriétés d'élasticités identiques à celle d'un acier à ressort.

Le choix de ce type de matériau va également dans le sens de l'obtention d'une bonne élasticité pour la membrane.

Avantageusement, la membrane est réalisée en alliage métallique comportant outre du Fer, une proportion comprise entre 35 et 45 % de Cobalt, 18 à 22 % de Chrome, 13 à 17% de Nickel, 5 à 9% de Molybdène, 1 à 3% de Manganèse, moins de 0,25 % de Carbone et moins de 0,2% de Béryllium.

Cette disposition permet de créer des membranes possédant à la fois une bonne élasticité et des qualités de résistance aux produits corrosifs.

Selon une mise en oeuvre particulière du corps de vanne (3) à membrane comportant une canalisation d'entrée de fluide (4) co-axiale avec la membrane d'obturation (6), le couvercle de serrage (9) et le piston de serrage (7), ce corps comporte un bourrelet en forme de demi-tore sur lequel vient prendre appui le couvercle (9) de la membrane pour créer l'étanchéité vis à vis de l'environnement extérieur à la vanne.

Cette diposition utilisée en combinaison avec les membranes selon l'invention garantit une bonne étanchéité de la vanne à membrane vis à vis du milieu extérieur, réduisant ainsi les échanges de gaz qui peuvent être contaminants pour le milieu externe comme pour le fluide transporté dans la canalisation de gaz.

Selon une mise en oeuvre du corps de vanne à membrane (3) comportant une canalisation d'entrée de fluide (4) co-axiale avec la membrane d'obturation (6) et le piston de serrage (7) venant appuyer sur la membrane pour provoquer la fermeture de la vanne, ce corps comporte un insert ayant la forme d'un anneau formant siège.

Les performances de la vanne en matière de qualité de la fermeture sont améliorées par l'utilisation de corps de vanne comportant un insert, en conjonction avec les membranes de forme et matériau conformes à l'invention.

Selon un mode particulier de réalisation du couvercle de serrage (9) pour vanne à membrane, ledit couvercle présente sur sa surface plane latérale, destinée à prendre appui sur le rebord latéral circulaire de la membrane (6) pour assurer l'étanchéité vis à vis de l'environnement extérieur, une rainure (12) concentrique avec la membrane (6) et le couvercle de serrage (9).

Cette mise en oeuvre contribue également à améliorer l'étanchéité de la vanne à membrane une fois assemblée.

La description qui va suivre, donnée à titre indicatif et nullement limitatif permet de mettre en évidence les caractéristiques et avantages de l'invention.
La figure 1 représente une vanne avec ses différents éléments principaux.
La figure 2 représente une vue en coupe verticale du corps de vanne assemblé.
La figure 3 représente une vue en coupe partielle de la membrane selon l'invention.
La figure 4 représente un insert formant siège modifié adapté à l'utilisation de membrane selon l'invention.
La figure 5 représente le couvercle de serrage de la vanne à membrane.

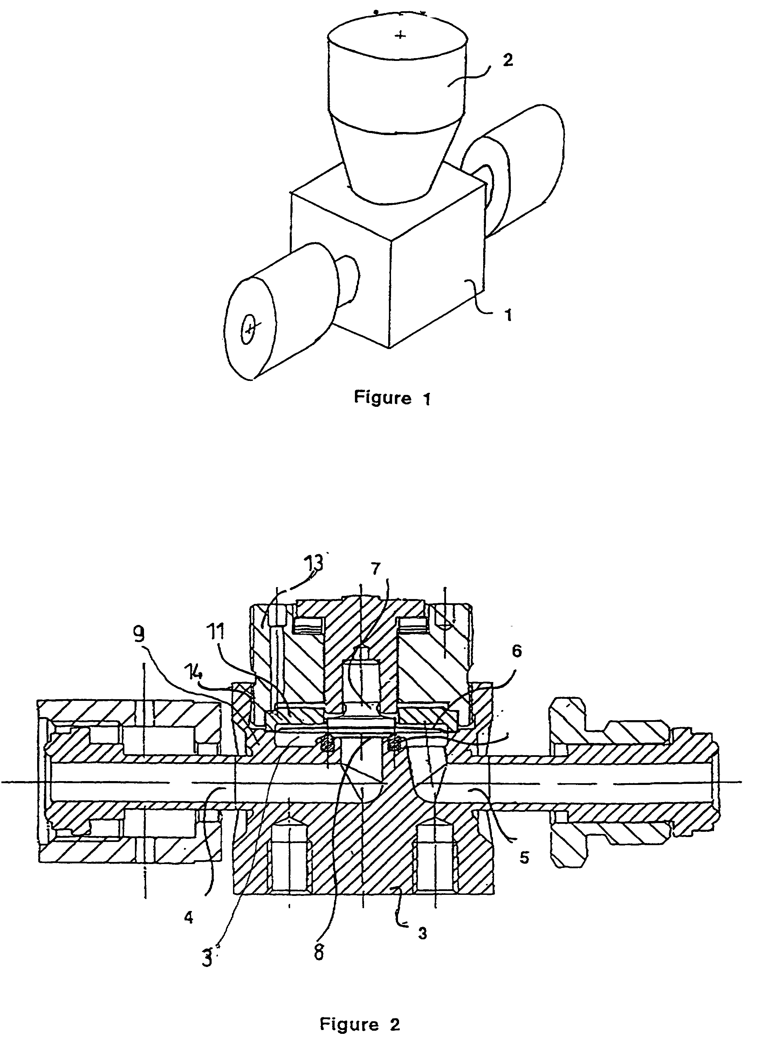

Tel que représenté selon une disposition classique sur la figure 1, la vanne selon l'invention comprend un corps de vanne 1 qui constitue la partie inférieure de la vanne, et sur lequel est monté l'actionneur 2, de nature manuelle ou mécanique.

De façon plus détaillée tel qu'il est visible la vue en coupe (Fig. 2), le corps de vanne 1 comprend une embase de vanne 3 dans laquelle sont ménagés les conduits d'arrivée 4 et d'évacuation des fluides 5, la membrane 6 formant dispositif de fermeture de la vanne lorsque le piston 7 vient déformer la membrane pour l'appliquer de façon hermétique sur le rebord du conduit d'arrivée des gaz.

Les conduits d'arrivée 4 et d'évacuation 5 de fluide aboutissent dans une chambre 8 de l'embase de vanne. Cette chambre 8 est circulaire et présente à sa périphérie un épaulement annulaire 9 plan sur lequel repose le rebord périphérique extérieur 10 de la membrane 6.

Avantageusement, le conduit 4 d'amenée de fluide est axial et central à la vanne.

Le corps de vanne est de nature connue, et son mode de réalisation est connu de l'homme de l'art. Il ne sera donc pas décrit plus avant ici.

La membrane 6 est serrée sur son rebord extérieur 10 entre d'une part le corps de vanne 3 au niveau de l'épaulement annulaire 9, et d'autre part un couvercle de serrage 11 qui présente éventuellement une rainure circulaire en forme de demi tore 12 et qui est doté d'un perçage central de passage du piston 7 de l'actionneur. Le couvercle de serrage est bloqué par un manchon de serrage 13 par exemple par un filetage, lequel manchon de serrage est à son tour assemblé sur le corps de vanne par l'intermédiaire d'un filetage 14. Cette mise en oeuvre garantit une très bonne étanchéité du montage de la membrane.

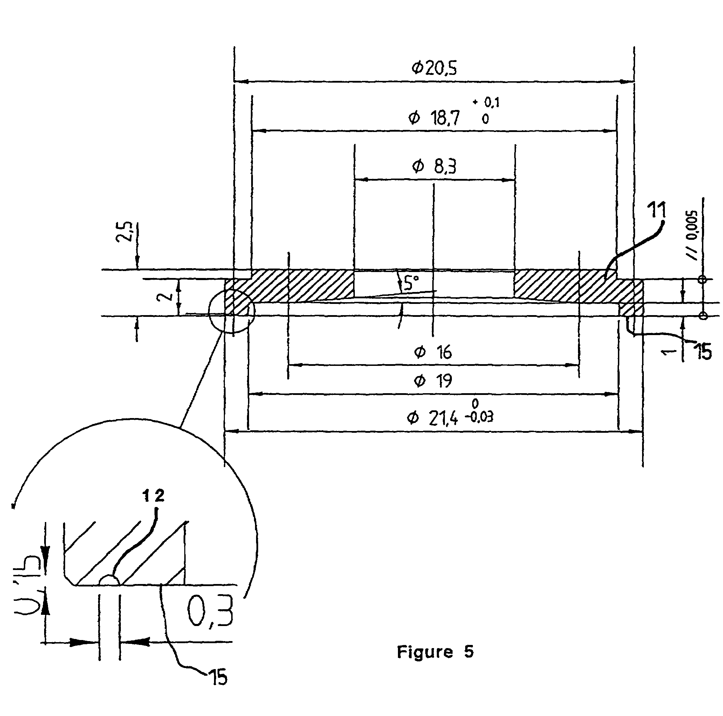

Le couvercle 11 est représenté en figure 5 par une vue en coupe. Il présente un perçage central et un rebord inférieur périphérique 15 formant un anneau qui vient en appui sur le rebord extérieur 10 de la membrane et qui est centré sur l'épaulement 9 annulaire.

La membrane 6 est réalisée à partir de bandes d'alliage métallique d'une épaisseur de l'ordre de 0,12 mm, découpée et emboutie par une presse à la forme désirée.

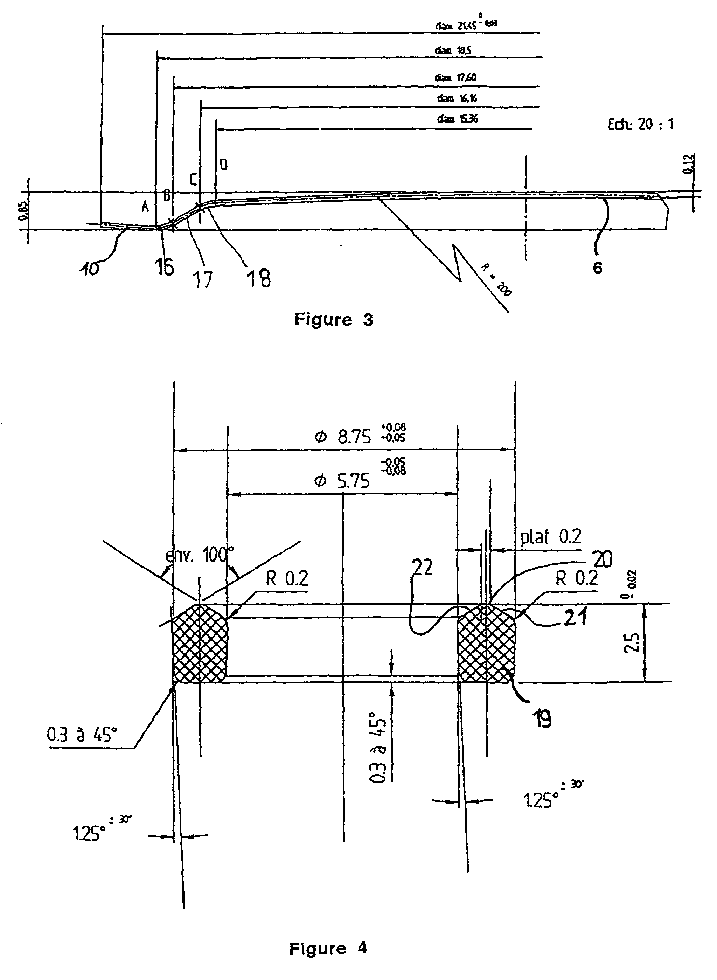

La membrane représentée en vue partielle à la figure 3 présente un rebord périphérique 10.

De préférence, comme représenté, ce rebord est légèrement relevé à sa périphérie. Ce rebord est délimité du côté interne par un pliage circulaire 16 orienté vers le haut définissant une portion annulaire 17 inclinée orienté vers le haut et délimitée par un pliage circulaire supérieur 18 entourant la partie supérieure de la membrane 6 qui est en forme de coupelle constituant une calotte sphérique ou parabolique de révolution.

Cette disposition de la membrane permet par appui de son rebord 10 légèrement relevé sous la pression du couvercle 11 sur l'épaulement 9 de mettre la membrane en tension de précontrainte.

Les pliages annulaires 16/17 rigidifient la périphérie de la membrane et seule sa portion centrale est susceptible de déformation par le piston 7 commandé par l'actionneur 2.

Cette configuration en escalier par les parties 10, 16, 17, 18 de la membrane lui confèrent une grande rigidité qui fait obstacle à sa déformation lors de la mise sous vide du circuit de fluide équipé des vannes selon l'invention.

L'épaisseur de la membrane est compris entre 0,08 mm et 0,16 mm. Son diamètre est de l'ordre de 21 millimètres. Le rayon de courbure de la calotte est de 200 millimètres environ et l'angle formé par le rebord 10 avec le fond de la coupelle est compris entre 25° et 40°. La profondeur de la coupelle est d'environ 0,85 mm prise entre le fond de la calotte sphérique et le rebord 10.

Le rayon de courbure de la calotte est approximativement égal à 20 fois le rayon de la coupelle.

De façon encore plus spécifique, la membrane est réalisée en alliage métallique ayant des propriétés de résistance chimique équivalentes à celles d'un acier inox austénitique référencé 316 L selon la norme ASTM, chargé en cobalt pour lui conférer des propriétés d'élasticité identiques à celles d'un acier à ressort. Le choix de ce type de matériau va également dans le sens de l'obtention d'une bonne élasticité pour la membrane.

Avantageusement, la membrane est réalisée en alliage métallique comportant outre du fer, une proportion comprise entre 35 et 45% de Cobalt, 18 à 22% de Chrome, 13 à 17% de Nickel, 5 à 9% deMolybdène, 1 à 3% de Manganèse, moins de 0,25% de Carbone et moins 0,2% de Béryllium.

Cette disposition permet de créer des membranes possédant à la fois une bonne élasticité et des qualités de résistance aux produits corrosifs.

Le corps de vanne comporte une gorge conique destinée à recevoir un siège 19 fixé par blocage représenté en figure 4, sur lequel vient s'appuyer la membrane 6 en position fermée. Le siège 19 est réalisé préférentiellement en résine synthétique de type PCTFE (Poly-Chloro-Tri-Fluoro-Ethylène) ou en alliage métallique, par exemple Acier 316L et Nickel, ou Nickel pur

Le siège 19 a la forme d'un anneau dont les côtés sont inclinés en ménageant un retreint et dont la partie supérieure présente une surface annulaire plane 20 de petite dimension par exemple 0,2 millimètre sur lequel appuie la membrane et deux parois 21, 22 inclinées et convergentes vers la surface supérieure annulaire plane 20.

L'assemblage du siège sur le corps de la vanne se fait par insertion en force dans le logement prévu à cet effet dans l'embase de la vanne. A cet effet, le choix d'un angle de 1,25° à plus ou moins 30' par rapport à l'axe perpendiculaire au corps de vanne pour les deux faces latérales du siège et de la gorge faisant effet de logement permet un montage en force sans aucun collage ou autre pièce, et apporte de plus une étanchéité du montage.

Le démontage d'un siège en PCTFE de son support peut se faire en utilisant de l'air chaud entraînant une dilatation différentielle du siège et de l'embase de vanne.

La portée de la présente invention ne se limite pas aux modes de réalisation présentés mais s'étend au contraire aux perfectionnements et modifications à la portée de l'homme de l'art.

## Revendications

1. Vanne destinée au contrôle de circuits de flux de fluide gazeux ou humide, ladite vanne comportant un corps de vanne (1) comprenant une embase de vanne (3) dans laquelle sont ménagés les conduits d'arrivée (4) et d'évacuation (5) de fluide, une membrane en forme de coupelle commandée par un piston (7) venant par déformation s'appliquer sur le rebord du conduit d'arrivée (4) pourvu d'un siège (19), la membrane est serrée sur son bord entre le corps de vanne et un couvercle de serrage (11), la coupelle de la membrane comprenant un rebord périphérique (10) délimité par un pliage (16) circulaire définissant une portion annulaire (17) inclinée délimitée par un pliage circulaire (18) entourant le fond (6) de la coupelle, **caractérisée en ce que** le rebord périphérique (10) forme un angle avec le fond (6) de la coupelle, le pliage circulaire (16) étant orienté vers le haut de manière à légèrement relever le rebord périphérique (10).

2. Vanne selon la revendication 1 **caractérisée en ce que** le siège (19) sur lequel appuie la coupelle présente une surface annulaire plane (20) et deux parois (21, 22) inclinées convergentes de part et d'autre de la surface (20).

3. Vanne selon la revendication 1 **caractérisée en ce que** l'angle formé par le rebord (10) de la membrane avec le fond (6) de la coupelle est compris entre 25 à 40°.

4. Vanne selon la revendication 1, **caractérisée en ce qu'**un rayon de courbure du fond (6) de la coupelle formant la membrane est approximativement égal à 20 fois le rayon de la coupelle.

5. Vanne selon la revendication 1, **caractérisée en ce que** l'épaisseur de la membrane est comprise entre 0,08 et 0,16 mm, **en ce que** son diamètre est de 20 mm environ, **en ce que** le rayon de courbure du fond (6) de la coupelle est de 200 mm environ, **en ce que** l'angle formé par le rebord avec le fond de la coupelle est compris entre 25 et 40°, et **en ce que** la profondeur de la coupelle est d'environ 0,85 mm entre le fond de la coupelle et le rebord de la coupelle.

6. Vanne selon l'une des revendications 1 à 5, **caractérisée en ce que** la membrane est réalisée en alliage métallique ayant des propriétés de résistance chimique équivalentes à celles d'un acier inox austénitique référencé 316 L selon la norme ASTM, chargé en cobalt pour lui conférer des propriétés d'élasticités identiques à celle d'un acier à ressort.

7. Vanne selon les revendications 1 à 6, **caractérisée en ce que** la membrane est réalisée en alliage métallique comportant outre du Fer, une proportion comprise entre 35 et 45 % de Cobalt, 18 à 22 % de Chrome, 13 à 17% de Nickel, 5 à 9% de Molybdène, 1 à 3% de Manganèse, moins de 0,25 % de Carbone et moins de 0,2% de Béryllium.

8. Vanne à membrane selon la revendication 1 **caractérisée en ce que** le siège (19) est un anneau dont les faces latérales forment par rapport à l'axe perpendiculaire au corps de vanne un angle de 1,25° à plus ou moins 30' et qui est monté en force dans une gorge de l'embase de la vanne.

9. Vanne selon la revendication 8 **caractérisée en ce que** le siège (19) est réalisé en résine synthétique de type poly-chlorore-fluoro-Etylène.

10. Vanne selon la revendication 8 **caractérisée en ce que** le siège (19) est réalisé en un alliage métallique acier C316L et Nickel ou Nickel pur.

11. Vanne selon la revendication 8 comportant une membrane maintenue par un couvercle (11) **caractérisée en ce que** ledit couvercle présente sur sa surface plane latérale (15) destinée à prendre appui sur le rebord latéral circulaire de la membrane pour assurer étancheïté vis à vis de l'environnement extérieur, une rainure concentrique (12) avec la membrane et le couvercle de serrage.

## Patentansprüche

1. Ventil zur Steuerung des Durchflusses von gasförmigen oder flüssigen Medien, bestehend aus einem Ventilgehäuse (1) mit einem Sockel (3), in dem die Rohrleitungen für den Eintritt (4) und den Ablauf (5) des Fluids untergebracht sind, einer durch einen Kolben (7) betätigten Membran in Form einer Schale, die durch Verformung auf dem mit einem Sitz (19) ausgestatteten Rand der Eintrittsleitung (4) aufliegt, wobei die Membran an ihrem Rand zwischen dem Ventilgehäuse und einem Spanndeckel (11) eingeklemmt ist und die Schale der Membran am Rand über eine Leiste (10) verfügt, die durch einen kreisförmigen Umschlag (16) begrenzt ist, die einen ringförmigen, geneigten Abschnitt (17) bildet, der wiederum durch eine kreisförmige Faltung (18) um den Boden der Schale (6) herum begrenzt ist, **gekennzeichnet dadurch, dass** die äußere Leiste (10) einen Winkel zum Boden (6) der Schale bildet, wobei der kreisförmige Umschlag (16) nach oben ausgerichtet ist, so dass er die äußere Leiste (10) leicht anhebt.

2. Ventil nach Anspruch 1 **dadurch gekennzeichnet, dass** der Sitz (19), auf dem die Schale aufliegt, eine flache, ringförmige Oberfläche (20) und zwei geneigte Wände (21,22) aufweist, die auf der einen und anderen Seite der Oberfläche (20) anliegen.

3. Ventil nach Anspruch 1 **dadurch gekennzeichnet, dass** der durch die Leiste (10) der Membran und den Boden (6) der Schale gebildete Winkel zwischen 25 und 40° beträgt.

4. Ventil nach Anspruch 1 **dadurch gekennzeichnet, dass** der Radius der Biegung des Bodens (6) der Schale, die die Membran bildet, in etwa 20 mal dem Radius des Schale entspricht.

5. Ventil nach Anspruch 1 **dadurch gekennzeichnet, dass** die Dicke der Membran zwischen 0,08 und 0,16 mm beträgt, dass ihr Durchmesser ungefähr 20 mm beträgt, dass der Radius der Biegung des Bodens (6) der Schale ungefähr 200 mm beträgt, dass der durch die Leiste und den Boden der Schale gebildete Winkel zwischen 25 und 40° beträgt und dadurch dass die Tiefe der Schale ungefähr 0,85 mm zwischen dem Boden der Schale und dem Rand der Schale beträgt.

6. Ventil nach einem der Ansprüche 1 bis 5 **dadurch gekennzeichnet, dass** die Membran aus einer Metalllegierung hergestellt ist, deren chemische Widerstandsfähigkeit der von nichtrostendem Austenitstahl der Referenz 316 L gemäß der Norm ASTM entspricht, mit Kobalt angereicht, um ihr die gleiche Elastizität wie Federstahl zu verleihen.

7. Ventil entsprechend der Ansprüche 1 bis 6 **dadurch gekennzeichnet, dass** die Membran aus einer Metalllegierung hergestellt ist, die außer Eisen 35 bis 45% Kobalt, 18 bis 22% Chrom, 13 bis 17% Nickel, 5 bis 9 % Molybdän, 1 bis 3% Mangan, weniger als 0,25% Kohlenstoff und weniger als 0,2% Beryllium enthält.

8. Ventil mit Membran nach Anspruch 1 **dadurch gekennzeichnet, dass** der Sitz (19) ein Ring ist, dessen seitlichen Flächen in bezug auf die senkrechte Achse mit dem Ventilgehäuse einen Winkel von 1,25° mit mehr oder weniger 30' bilden und der in einer Vertiefung des Ventilsockels eingetrieben ist.

9. Ventil nach Anspruch 8 **dadurch gekennzeichnet, dass** der Sitz (19) aus Kunstharz des Typs Polychlorfluoräthylen hergestellt ist..

10. Ventil nach Anspruch 8 **dadurch gekennzeichnet, dass** der Sitz (19) aus einer Metalllegierung aus Stahl des Typs C316L und Nickel oder aus reinem Nickel hergestellt ist.

11. Ventil nach Anspruch 8 mit einer durch einen Deckel (11) festgehaltenen Membran **dadurch gekennzeichnet, dass** der genannte Deckel auf seiner seitlichen, flachen Fläche (15), die dazu bestimmt ist, auf dem seitlichen, ringförmigen Rand der Membran aufzuliegen, um die Dichtigkeit gegenüber dem Umfeld sicherzustellen, eine konzentrische Rille (12) mit der Membran und dem Spanndeckel aufweist.

## Claims

1. Valve intended to control circuits of gaseous or wet fluid, which valve includes a valve body (1) including a valve base (3) in which fluid inlet (4) and evacuation ducts (5) are provided, a membrane in the form of a cup controlled by a piston (7) that deforms to come up against the edge of the inlet duct (4) provided with a seat (19), the membrane being tightened on its edge between the valve body and a clamping cover (11), the membrane cup including a surrounding edge (10) delimited by a circular fold (16) defining a tilted angular portion (17) delimited by a circular fold (18) surrounding the bottom (6) of the cup, **characterised by** the fact that the surrounding edge (10) forms an angle with the bottom (6) of the cup, and the circular fold (16) being directed towards the top so as to slightly raise the surrounding edge (10).

2. Valve according to claim 1 **characterised by** the fact that the seat (19) onto which the cup comes to rest has a smooth annular surface (20) and two walls (21, 22) tilted and converging on either side of the surface (20).

3. Valve according to claim 1 **characterised by** the fact that the angle formed by the edge (10) of the membrane with the bottom (6) of the cup is between 25 and 40°.

4. Valve according to claim 1 **characterised by** the fact that a radius of curvature of the bottom (6) of the cup forming the membrane is approximately equal to 20 times the radius of the cup.

5. Valve according to claim 1 **characterised by** the fact that the thickness of the membrane is between 0.08 and 0.16 mm, that its diameter is about 20 mm, that the radius of curvature of the bottom (6) of the cup is about 200 mm, that the angle formed by the edge with the bottom of the cup is between 25 and 40°, that the depth of the cup is about 0.85 mm between the bottom of the cup and the edge of the cup.

6. Valve according to claims 1 to 5 **characterised by** the fact that the membrane is made of metallic alloy with chemical resistance properties equivalent to that of an austenitic stainless steel referenced 316 L in accordance with ASTM standard, with a cobalt content that gives it elastic properties identical to that of a spring steel.

7. Valve according to claims I to 6 **characterised by** the fact that the membrane is made of a metallic alloy also including iron, a proportion of between 35 and 45% of cobalt, 18 to 22% of chromium, 13 to 17% of nickel, 5 to 9% of molybdenum, 1 to 3% pf manganese, less than 0.25% of carbon and less than 0.2% of beryllium.

8. Valve with membrane according to claim 1 **characterised by** the fact that the seat (19) is a ring whose sides form an angle of 1.25° to within more or less 30' to the axis perpendicular to the valve body and that is force fitted in the throat at the base of the valve.

9. Valve according to claim 8 **characterised by** the fact that the seat (19) is made of synthetic resin of the chlorinated poly-fluorated ethylene type.

10. Valve according to claim 8 **characterised by** the fact that the seat (19) is made of a C316L steel metallic alloy and nickel or pure nickel.

11. Valve according to claim 8 including a membrane held by a cover (11) **characterised by** the fact that the cover has a concentric groove (12) with the membrane and the clamp cover on the smooth side surface (15) intended to rest on the circular side edge of the membrane to ensure sealing from the outside environment.
